# EUROPEAN PATENT APPLICATION

(11) **EP 2 343 025 A2**
(43) Date of publication of application: **13.07.2011**
(21) Application number: 11150626.7
(22) Date of filing: 11.01.2011
(51) Int. Cl.: A61C 13/00, A61C 8/00

(54) **Dental implant abutment blank for tailor-made dental abutments and method for manufacturing a dental abutment using the same**

(30) Priority: 12.01.2010 KR 20100002518
(71) Applicant: RaphaBio Co., Ltd., Seoul (KR)
(72) Inventor: Kim, Jung-Han, Seoul (KR)
(74) Representative: Capasso, Olga

(57) **Abstract**

The present invention relates to an implant abutment material for tailor-made for manufacturing an abutment for tailor-made in consideration of individual characteristics of patients' teeth and which allows for mass production, and a method for manufacturing an abutment for tailor-made using the implant abutment material for tailor-made.

For this purpose, an abutment material of the present invention is a product including: a cylindrical body (110); a grip (130) integrally formed at the end of the body to be used to clamp the body to a machine when manufacturing a tailor-made abutment by machining the body; a coupling portion (120) formed at the other end of the body and coupled with the fixture; and a fastening hole (140) formed through the grip, the body, and the coupling portion, to be coupled to the fixture.

## Description

### BACKGROUND OF THE INVENTION

### 1. Field of the Invention

The present invention relates to an implant abutment material and a method for manufacturing an implant abutment using the same. More particularly, the present invention relates to an implant abutment material for tailor-made for manufacturing an abutment for tailor-made in consideration of individual characteristics of patients' teeth and which allows for mass production, and a method for manufacturing an abutment for tailor-made using the implant abutment material for tailor-made.

### 2. Description of the Related Art

Implants are artificial teeth that are implanted in the alveolar bone when teeth are damaged or missing. The implant can be implanted in the portion with teeth missing, without damaging adjacent teeth. Implant surgery has the advantage of rapidly restoring the functionality of teeth, the aesthetic appearance, clear pronunciation of speech, and health of the entire mouth.

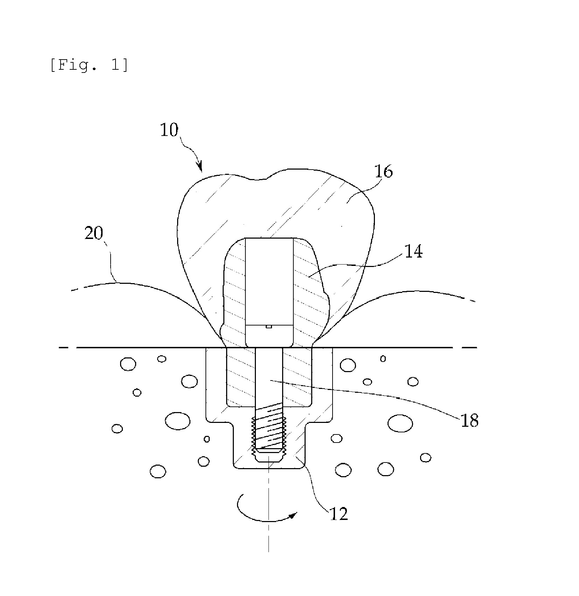

FIG. 1 is a view showing an assembly of a common implant.

As shown in FIG. 1, an implant 10 includes a fixture 12 that is usually implanted in the gum 20, an abutment 14 that supports the implant 10 by being fixed to the fixture 12 by a screw 18, and a crown 16 that is fixed on the abutment to make the outer shape of the artificial tooth.

The abutment 14, among the components, delivers load, which is transmitted from the crown 16, to the fixture 12, such that the load is transmitted to the bone of the jaw with the fixture. The abutment 14 should be manufactured in consideration of the size, shape, and outline of the artificial tooth. Further, the abutment 14 should be manufactured in consideration of all of interlocking with the adjacent teeth and the teeth on the opposite arch (upper teeth or lower teeth), characteristics of the teeth of the individuals, the state of the gum 20, and the gum line.

Therefore, tailor-made types that are manufactured, depending on the patients' teeth are preferred, for the abutment 14 of an implant, as compared with ready-made articles that are supplied with uniform sizes.

The tailor-made abutment 14 has been manufactured by molding (particularly, wax building-up), by skilled dental technician, on the basis of the shape of a tooth pattern made from a patient in the related art. The dental technicians have made a plaster mold for the abutment 14 corresponding to the shape of a tooth pattern, on the basis of their experience, and manufactured the abutment 14 by pouring molten metal into the plaster mold.

However, the tailor-made abutment 14 that has been manufactured by using a mold in the related art is difficult to be manufactured with the exact shape and size, depending on patients. Accordingly, there was a problem, for example, a gap is generated between the abutment 14 and the gum 20, causing residue of food to be stuck in the gap, which leads to tooth decay or discomfort in the mouth.

Meanwhile, when the implant 10 is manufactured by molding after making a plaster mold from a tooth pattern of a patient, generally, in the abutment 14, the portion coupled with the fixture 12 is made of titanium and the portion coupled with the crown 16 is made of gold. However, strength is low because the two materials are simultaneously used, and the gold may be another economic burden to the patient because it is expensive.

Further, there were problems that blowholes were made in molding, the margin line was not smooth in comparison to ready-made ones, and it could not be completely coupled with the fixture 12.

The applicant(s) has proposed, in Korean Patent Registration No. 0795645 (registered on January 10, 2008), a method of manufacturing a tailor-made abutment that has solved the problems generated when manually performed, by designing a virtual tooth by creating a 3D-image of the mouth of a patient, designing the shape of an abutment from the virtual tooth, and precisely machining a material to fit the shape of the tooth, in order to overcome the problems.

The method, however, also requires an additional process of cutting a cylindrical bar, a material for an abutment, to have the optimum size, and machining the fastened-portion to be used with a fixture.

The processes of manufacturing an abutment of the related art, such as the manual work using molding and the work using precise machining, are works requiring precision and know-how and disadvantageous in requiring relatively much time and efforts.

### SUMMARY OF THE INVENTION

The present invention has been made in an effort to provide an implant abutment material that can be tailor-made in large quantities by making and supplying portions requiring precision in advance in manufacturing a tailor-made abutment.

Further, the present invention has been made in an effort to provide a method of manufacturing a tailor-made abutment for implant using the abutment material.

An exemplary embodiment of the present invention provides an implant abutment material for manufacturing an abutment connecting a fixture that is implanted in a gum with a crown forming the outer shape of an artificial tooth, including: a cylindrical body; a grip integrally formed with the body to clamp the body to a machine when manufacturing a tailor-made abutment by machining the body; a coupling portion formed at the other end of the body and coupled with the fixture; and a fastening hole formed through the grip, the body, and the coupling portion, to insert a fastener to insert a fastener for coupling the fixture.

The implant abutment material may further include a groove formed on a side of the grip, as a positional and orientational reference for clamping the abutment material to the machine.

The body may be tapered such that the diameter increases upward.

The grip may additionally have a flat formed by cutting off the outer circumference of the grip.

According to another exemplary embodiment of the present invention, the grip of the implant abutment material may have at least two flats formed by cutting off the outer circumference of the grip.

The angles between the flats that are adjacent to each other are the same.

Further, according to another exemplary embodiment of the present invention, the grip of the implant abutment material extends from the body.

The body and the grip have regular polygonal cross-sections.

Further, according to another exemplary embodiment of the present invention, the grip of the implant abutment material is formed at a side of the body and the cross-section of the grip is smaller in size than the cross-section of the body.

The cross-sectional shapes of the grip and the body are circles or regular polygons.

Meanwhile, the abutment material according to the present invention may be any one of titanium, a titanium alloy, and a cobalt-chrome alloy.

Another exemplary embodiment of the present invention provides a method of manufacturing a tailor-made abutment connecting a fixture that is implanted in a gum with a crown forming the outer shape of an artificial tooth, the method including: (a) providing an abutment material formed to manufacture the tailor-made abutment; (b) cutting off the abutment material in a desired size; and (c) machining the tailor-made abutment on the basis of a designed abutment shape in consideration of the position where the tailor-made abutment is mounted and the individual characteristics of a tooth.

The providing of an abutment material (a) may includes: (a-1) integrally forming a grip, which is used for clamping a cylindrical body to a machine when manufacturing a tailor-made abutment, at one end of the body, by machining the body;(a-2) forming a coupling portion that is coupled with the fixture, at the other end of the body, using the grip; and (a-3) forming a fastening hole through the grip, the body, and the coupling portion.

The method may further include forming a groove, which functions as a jig, on the side of the grip, in the manufacturing of an abutment material.

The method may further include forming flats at the grip by cutting off the outer circumference of the grip, in the manufacturing of an abutment material.

Meanwhile, the machining of the tailor-made abutment is performed by molding or by a precision machine.

According to the exemplary embodiments of the present invention, it is possible to more quickly manufacture an implant abutment material by not only molding of the related art, but by using a precision machine, and to manufacture abutments in large quantities, by supplying an abutment material of which some portions (fastening hole and coupling portion etc.), which are difficult to form, have been formed in advance, in order to manufacture a tailor-made abutment.

Further, according to the exemplary embodiments of the present invention, since the portion requiring precise structures, for example, the fastening hole and the coupling portion etc. are formed in advance for supply, even if the abutment material is manufactured by hand, as in the related art, it is possible to easily work with high precision.

### BRIEF DESCRIPTION OF THE DRAWINGS

FIG. 1 is a view showing an assembly of a common implant;
FIG. 2 is a perspective view of an abutment material for tailor-made according to a first exemplary embodiment of the present invention;
FIG. 3 is a front view of the abutment material for tailor-made according to the first exemplary embodiment of the present invention;
FIG. 4 is a cross-sectional view of the abutment material for tailor-made according to the first exemplary embodiment of the present invention;
FIGS. 5 and 6 are a plan view and a rear view of the abutment material for tailor-made according to the first exemplary embodiment of the present invention;
FIG. 7 is a flowchart illustrating a method of manufacturing a tailor-made abutment using the abutment material according to the first exemplary embodiment of the present invention;
FIGS. 8A and 8B are a perspective view and a front view showing the abutment material for manufacturing the tailor-made abutment according to the first exemplary embodiment of the present invention;
FIGS. 9A and 9B are a perspective view and a front view showing an abutment material for manufacturing a tailor-made abutment according to a second exemplary embodiment of the present invention;
FIGS. 10A and 10B are a perspective view and a front view showing an abutment material for manufacturing a tailor-made abutment according to a third exemplary embodiment of the present invention;
FIG. 11 is a perspective view of an abutment material for tailor-made according to a second exemplary embodiment of the present invention;
FIG. 12 is a side view of the abutment material for tailor-made according to the second exemplary embodiment of the present invention;
FIG. 13 is a perspective view of an abutment material for tailor-made according to a third exemplary embodiment of the present invention;
FIG. 14 is a side view of the abutment material for tailor-made according to the third exemplary embodiment of the present invention;
FIG. 15 is a perspective view of an abutment material for tailor made according to a fourth exemplary embodiment of the present invention;
FIG. 16 is a side view of the abutment material for tailor-made according to the fourth exemplary embodiment of the present invention;
FIG. 17 is a view showing when six flats are formed at a grip, in the abutment material for tailor-made according to the fourth exemplary embodiment of the present invention;
FIG. 18 is a perspective view of an abutment material for tailor made according to a fifth exemplary embodiment of the present invention;
FIG. 19 is a side view of the abutment material for tailor-made according to the fifth exemplary embodiment of the present invention;
FIG. 20 is a perspective view of an abutment material for tailor-made according to a sixth exemplary embodiment of the present invention; and
FIG. 21 is a side view of the abutment material for tailor-made according to the sixth exemplary embodiment of the present invention.

### DETAILED DESCRIPTION OF THE EMBODIMENTS

Hereinafter, an implant abutment material for tailor-made according to exemplary embodiments of the present invention will be described in detail with reference to the accompanying drawings.

Actually, the position of a jig supporting a cylindrical bar and strength for supporting the cylindrical bar are important in a process of cutting the cylindrical bar to an appropriate size, when manufacturing an abutment in accordance with individual characteristics of patients' teeth. In particular, it is important to make a design to carry a force that is applied in machining, in order to perform a cutting process, with an about 8 cm or less small titanium cylindrical bar supported, using a large ultra-precision machine.

Further, a precise machining technique is important at the coupling portion where an abutment and a fixture are coupled.

The present invention provides an abutment material with a coupling portion for fastening a fixture precisely machined in advance, having portions for supporting a jig and a cylindrical bar at the cylindrical bar.

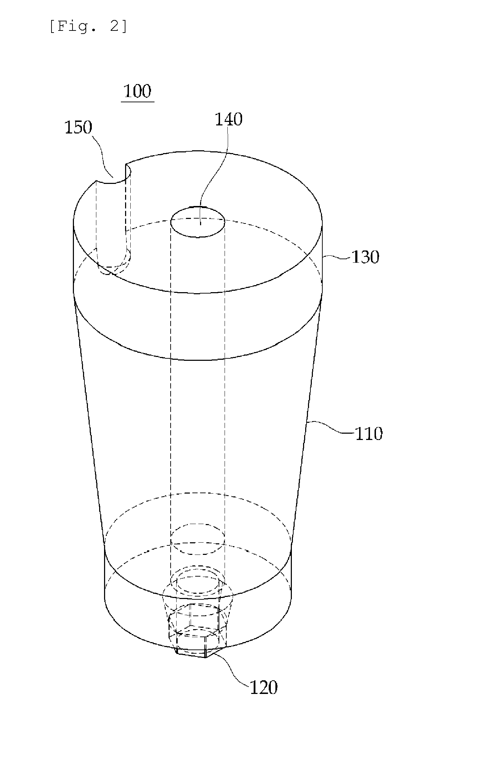

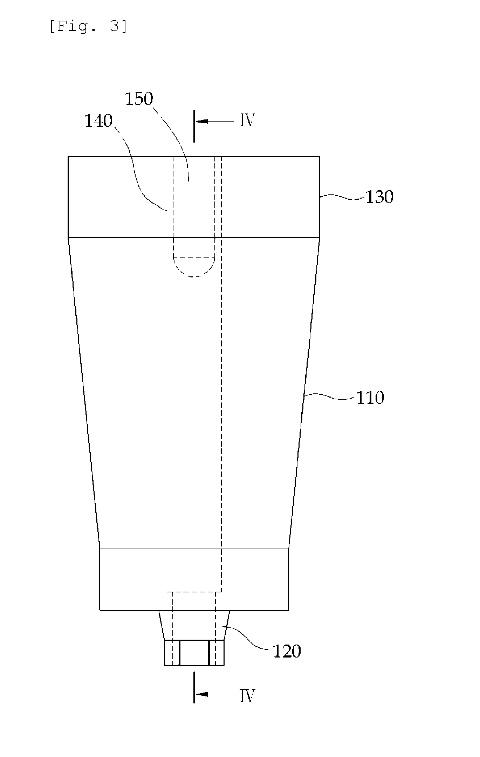

FIG. 2 is a perspective view of an abutment material for tailor-made according to a first exemplary embodiment and FIGS. 3 to 6 are a front view, a cross-sectional view, a plan view, and a rear view, respectively, showing the abutment material for tailor-made according to the first exemplary embodiment of the present invention.

Referring to FIGS. 2 to 6, an abutment material 100 for tailor-made according to a first exemplary embodiment of the present invention includes a cylindrical body 110, a grip 13 integrally formed at one end of the body 110 to a predetermined size, a coupling portion 120 formed at the other end of the body 110, a fastening hole 140 formed through the grip 130, the body 110, and the coupling portion 120, and a groove 145 formed on the side of the grip 130.

According to an exemplary embodiment of the present invention, the body 110 is tapered such that the diameter of the cylinder increases upward.

The coupling portion 120 protrudes from the bottom of the body 110 and is coupled with an implant fixture 12 (see FIG. 1). The coupling portion 120 may be formed to fit the shape of the fixture 12 (see FIG. 1), which is uniformly manufactured by the manufacturer of the fixture.

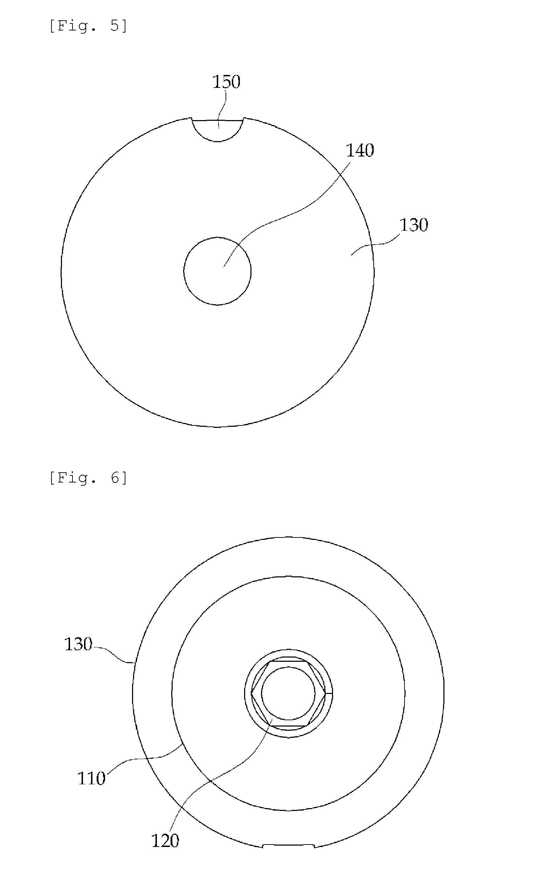

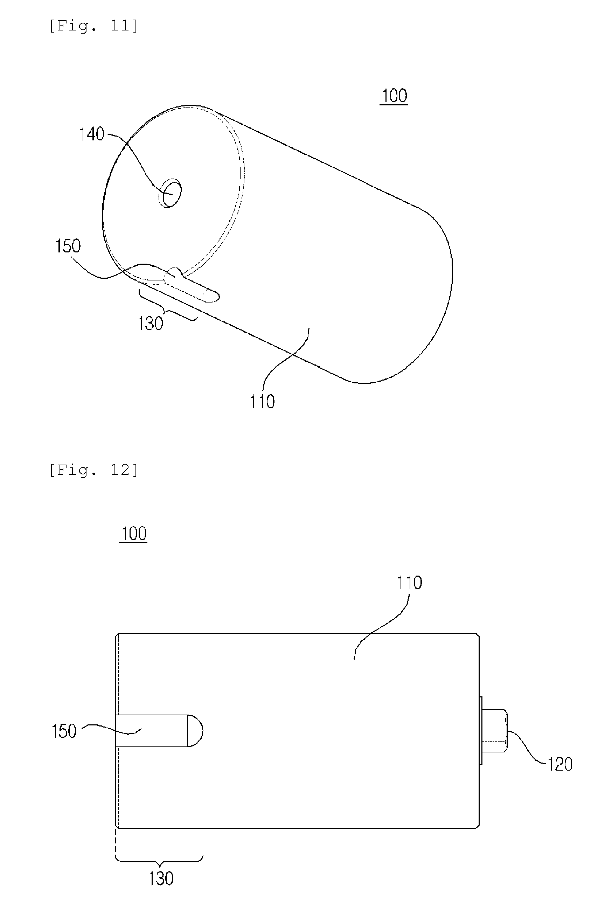

For example, the coupling portion 120 may be formed in a nut shape, as shown in FIG. 6. The coupling portion 120 is fixed to the fixture 12 (see FIG. 12), supporting a crown 16 (see FIG. 1).

The grip 130 is used to clamp the abutment material 100 to a machine to manufacture a tailor-made abutment. In particular, the grip 130 may be used as a clamp that fixes the body 110 to a precision machine to machine the coupling portion 120 of the body 110 with the precision machine.

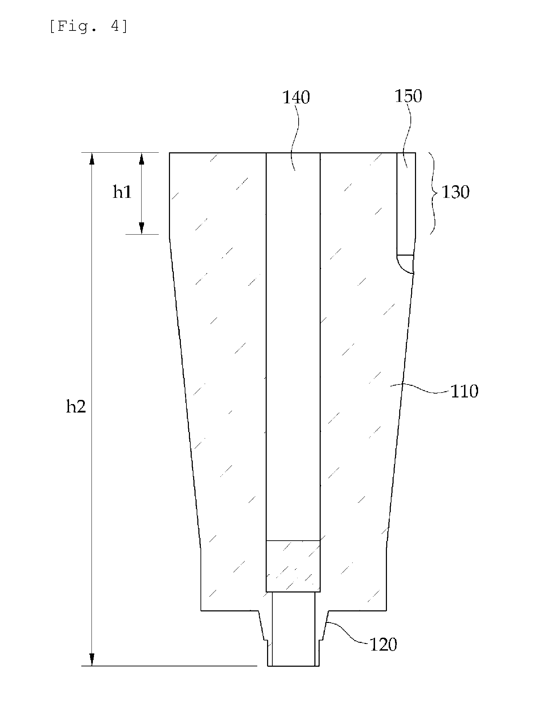

Though not limited in size, it is preferable that the grip 130 has a size suitable for clamping the body in the tailor-made manufacturing. As shown in FIG. 4, the length h1 of the grip 130 may be about 4 mm, when the entire length h2 of the abutment material 100 is 25 mm, in this exemplary embodiment. Although the larger the length of the grip 130, the more the clamping is stable, the size of the material and the material itself unnecessarily increase as much as the increase of the length, which may increase the manufacturing cost.

The fastening hole 140 is a space where a screw, a fastener, is inserted, when an abutment manufactured by machining the abutment material 100 according to an exemplary embodiment of the invention is coupled to the implant fixture. The inner diameter of the fastening hole 140 may substantially be the diameter of the screw.

Since the fastening hole 140 is through the centers of the grip 130, the body 110, and the coupling portion 120, the space for the screw is maintained even after the tailor-made abutment is machined.

The groove 150 is the positional or orientational reference when the abutment material 100 is clamped in a machine, for machining the coupling portion 120 or the tailor-made abutment.

As described above, the abutment material 100 according to the first exemplary embodiment of the present invention is provided as a product, by forming the body 110 by cutting a cylindrical bar in an optimum size to simply machine an abutment, and machining the grip 130, the coupling portion 120 for coupling with the fixture, and the fastening hole 140 in the body 110.

Therefore, it is possible to reduce the time for manufacturing a tailor-made abutment as much as possible by reducing the number of works for machining the tailor-made abutment, which is manufactured to fit the specifications of the individual tooth of a patient. In particular, it is possible to remove at one time a limit in manually manufacturing an abutment made of a hard material and low precision between the fixture and the coupling portion.

Further, although the support of the abutment is made of titanium and the head is made of gold in the related art, according to this configuration, since it is possible to overcome the limit in manually machining hard titanium, the abutment can be made of only one material, for example, titanium, such that it is possible to improve strength of the abutment, which may be economical.

Meanwhile, the abutment material 100 according to an exemplary embodiment of the present invention may be made of a titanium alloy, such as Ti-6Al-4V, an alloy containing cobalt and chrome as the main components, or a cobalt-chrome-molybdenum alloy.

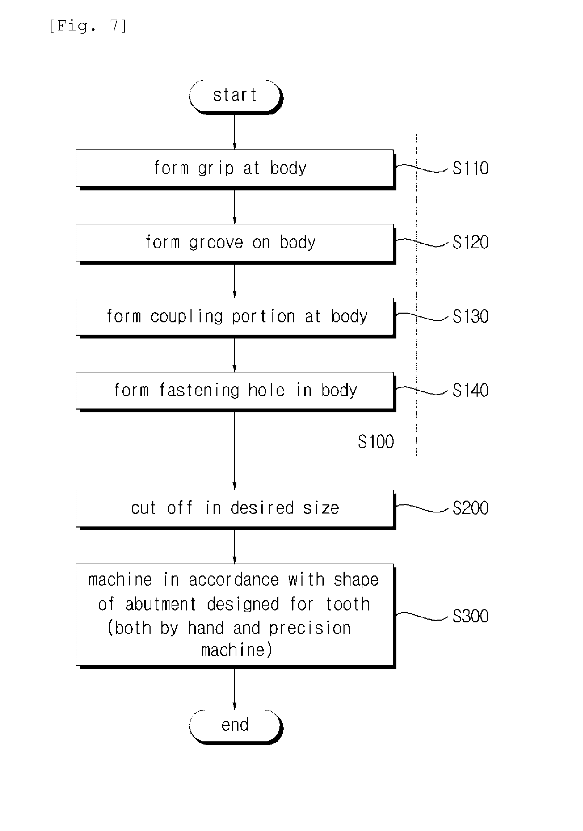

Next, a method of manufacturing a tailor-made abutment using the abutment material described above is described with reference to FIG. 7.

Describing in connection with the components of FIG. 2, the abutment material 100 manufactured for manufacturing a tailor-made abutment is provided (S100).

The abutment material 100 may be manufactured by integrally forming the grip 130at an end of the cylindrical body 110 having a predetermined length (S110), forming the groove 150 that is the positional reference for machining, on the side of the grip 130 (S120), and forming the coupling portion 120 and the fastening hole 140 in the body 110 with reference to the grip 130 and the groove 150 (S130 and S140).

The abutment material 110 may be made of only titanium in this configuration, or made of a titanium alloy, an alloy containing cobalt and chrome as the main components, or a cobalt-chrome-molybdenum alloy.

Further, the fastening hole 140 is formed through the centers of the grip 130, the body 110, and the coupling portion 120, as described above. Therefore, the fastening hole 140 is kept in a tailor-made abutment, which is the complete product, even after the upper portion of the body 110 is cut off and the side is machined in order to manufacture the tailor-made abutment.

Thereafter, the shape of the abutment is designed in consideration of the characteristics of individual teeth of a patient in a dental laboratory or the dental laboratory in a dental clinic and then the abutment material that has been manufactured by the steps above is cut in a desired size on the basis of the size of the designed abutment (S200). It is preferable to make the design of the shape of the abutment in three dimensional and the abutment shape may be virtually designed three-dimensionally by CAD (Computer Aided Design).

Thereafter, a tailor-made abutment fitting to a desired tooth of a patient is manufactured by machining the cut abutment material on the basis of the designed abutment shape (S300). The machining may be performed by hand, using molding, as in the related art, or may be performed automatically by a precision machine on the basis of the 3D-virtual design described above. In the automatic machining using a precision machine, the precision machine cuts off the body, with the grip at the body of the abutment material clamped, in accordance with the abutment shape that has been designed individually according to the characteristics of the patient's tooth, thereby manufacturing a tailor-made abutment.

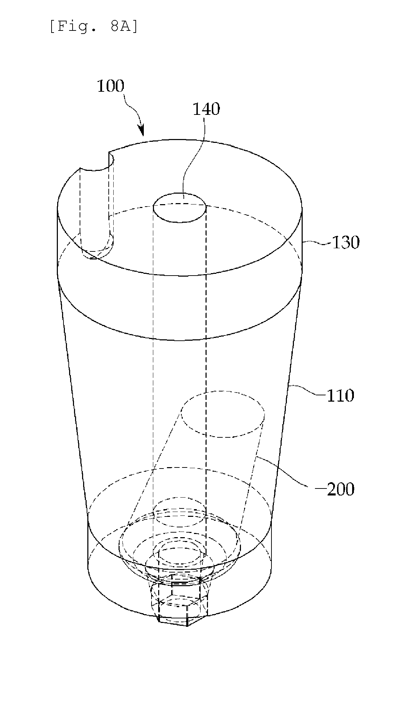

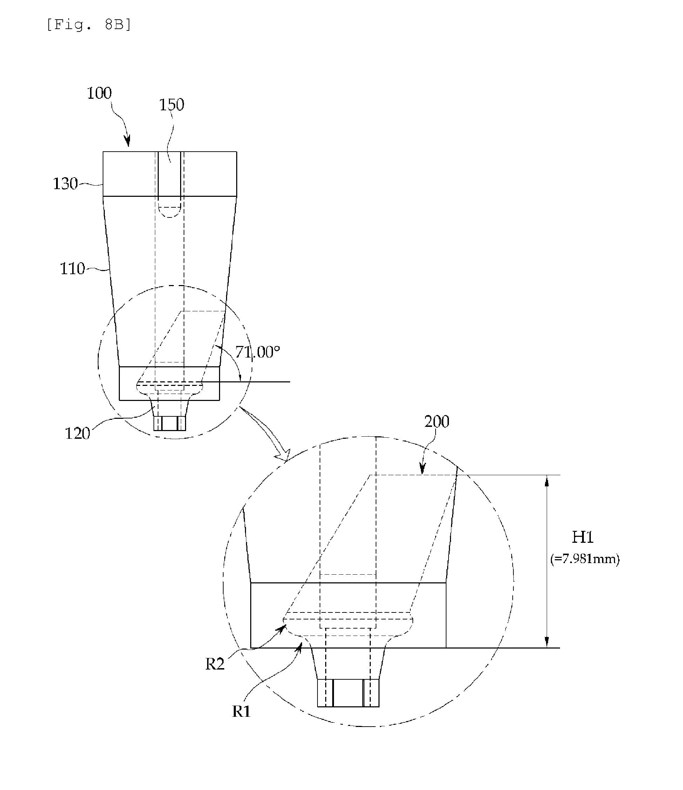

For example, FIGS. 8A and 8B show a tailor-made abutment according to the first exemplary embodiment which is manufactured by the process described above.

As shown in FIGS. 8A and 8B, a tailor-made abutment 200 according to the first exemplary embodiment is formed with a side inclining from the center of the body 110 to a side. The example of the structure of the tailor-made abutment 200 was appropriately designed in accordance with the individual characteristics of a patient's tooth.

In the first exemplary embodiment, the abutment was designed such that the length H1 of the tailor-made abutment, except for the coupling portion 120, was about 7.981 mm and the side asymmetrically inclined at about 71.00 degree from the horizontal surface of the body 110.

The upper portion of the body 110 of the abutment material 100 is cut off such that the length from the bottom of the body 110 becomes 7.981 mm, the side is inclined at about 71.00 degree with respect to the horizontal surface of the body 110, and the bottom of the body 110 is precisely rounded R1 and R2, in order to manufacture the tailor-made abutment 200 according to the first exemplary embodiment.

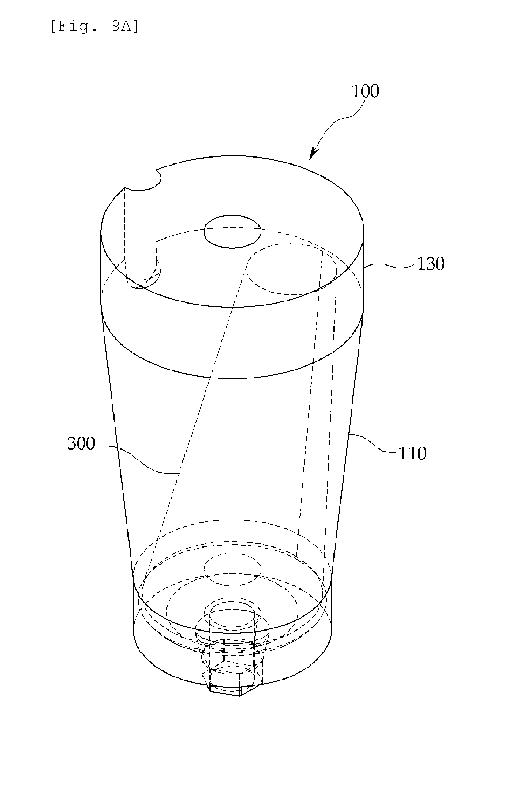

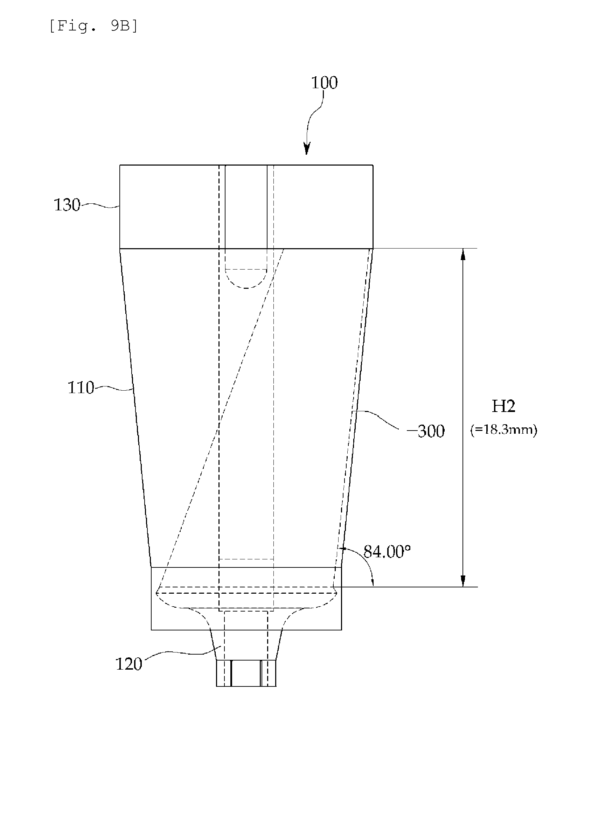

A tailor-made abutment according to a second exemplary embodiment is shown in FIGS. 9A and 9B, as another example.

A tailor-made abutment 300 according to the second exemplary embodiment was designed such that the body had a length H2 relatively large at 18.3 mm and the side inclined at a predetermined angle, similar to the first exemplary embodiment.

The upper portion of the body 110 of the abutment material 100 is cut off such that the length from the bottom of the body 110 become 18.3 mm, the side is inclined at about 84.00 degree with respect to the horizontal surface of the body 110, and the bottom of the body 110 is precisely rounded, in order to manufacture the tailor-made abutment 300 according to the second exemplary embodiment.

Although the dimensions of predetermined parts were described for the convenience of understanding in the drawings and the description above, it will be apparent to those skilled in the art that the machining is performed on dimensions, including specific length, diameter, and angle, for each part in manufacturing the tailor-made abutment.

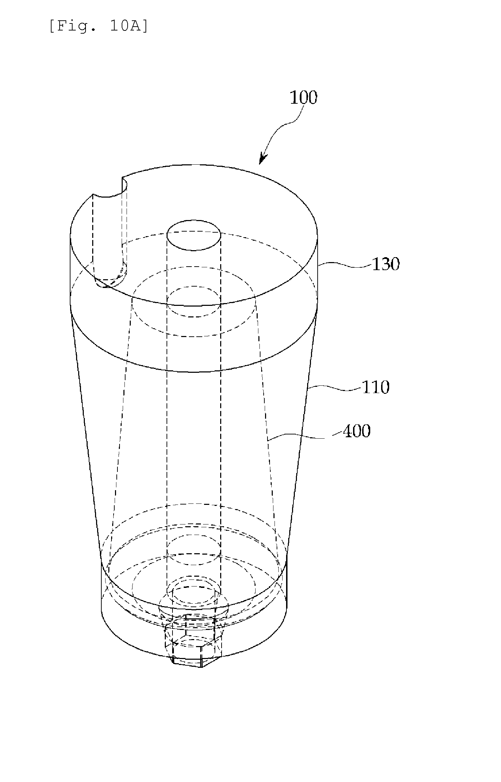

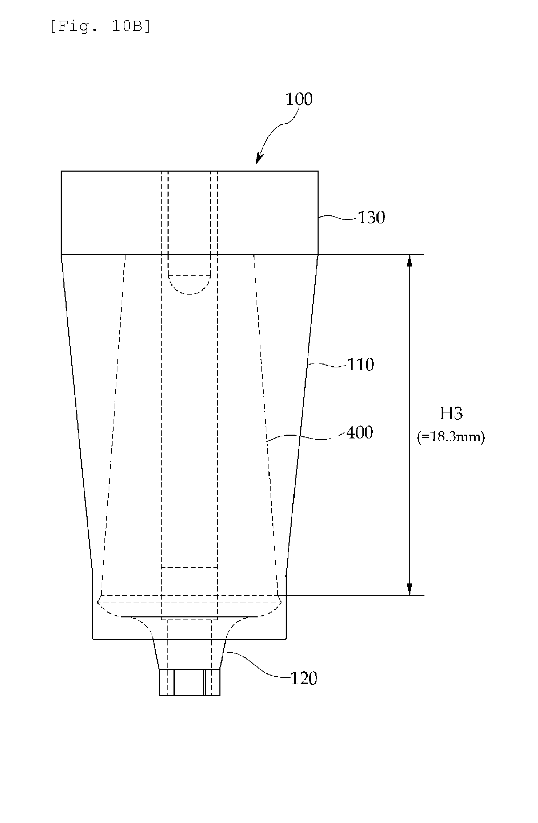

As another example, referring to FIGS. 10A and 10B, a tailor-made abutment 400 according to a third embodiment has a symmetric structure with respect to the center, with the sides not inclining, as in the tailor-made abutments 200 and 300 according to the first and second exemplary embodiments.

Although the length H3 of the tailor-made abutment 400 is relatively large, about 18.3 mm, in the figure, it is not limited thereto and may be variously changed.

The tailor-made abutment materials according to other exemplary embodiments of the present invention are described hereafter.

FIGS. 2 to 6 show the tailor-made abutment material 100 including the body 110 tapered such that diameter of the cylinder increases upward and the grip 130 extending from the body 110. However, the shape of the tailor-made abutment 100 in the exemplary embodiment of the present invention is not limited to those shown in FIGS. 2 to 6 and may be modified in various ways.

The tailor-made abutment material 100 according to another exemplary embodiment of the present invention is described hereafter. In the following description, the same configuration as that of the tailor-made abutment material 100 according to the first exemplary embodiment of the present invention is briefly described and specific parts are mainly described.

FIG. 11 is a perspective view of an abutment material for tailor-made according to a second exemplary embodiment of the present invention and FIG. 12 is a side view of the abutment material for tailor-made according to the second exemplary embodiment of the present invention.

The abutment material 100 for tailor-made according to the second exemplary embodiment of the present invention includes a cylindrical body 110 having a constant diameter, a grip 130 having a groove 150 formed on the outer circumference of one end of the body 110, and a coupling portion 120 formed at the other end of the body 110.

The body 110 and the grip 130 have cylindrical shapes and the grip 130 substantially extends from the body 110. A fastening hole 140 is formed through the centers of the grip 130, the body 110, and the coupling portion 120.

The grip 130 having the groove 150 that is the positional and orientational reference is clamped to manufacture a tailor-made abutment, using the abutment material 100 for tailor-made according to the second exemplary embodiment of the present invention.

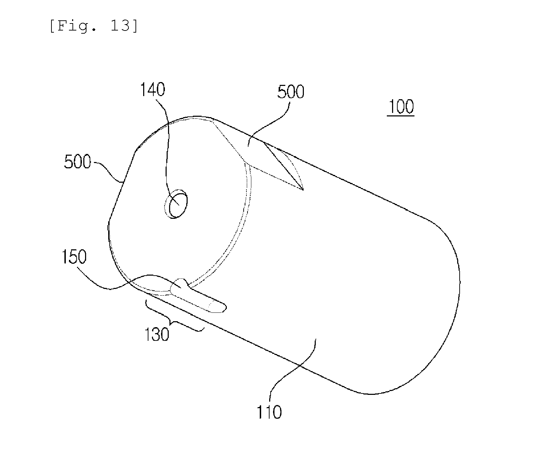

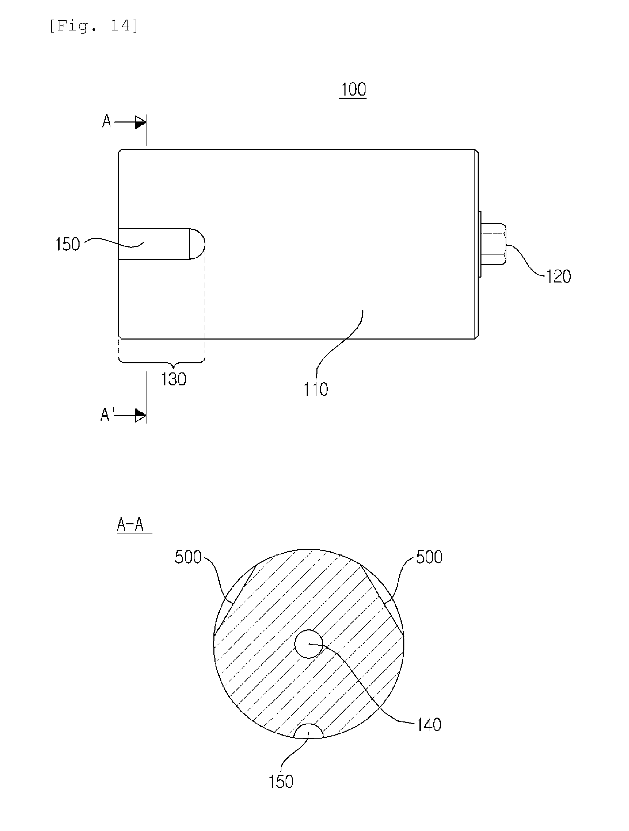

FIG. 13 is a perspective view of an abutment material for tailor-made according to a third exemplary embodiment of the present invention and FIG. 14 is a side view of the abutment material for tailor-made according to the third exemplary embodiment of the present invention.

The abutment material 100 for tailor-made according to the third exemplary embodiment of the present invention includes a cylindrical body 110 having a constant diameter, a grip 130 having a groove 150 formed on the outer circumference of one end of the body 110, and a coupling portion 120 formed at the other end of the body 110. Further, the abutment material 100 has a fastening hole 140 formed through the centers of the grip 130, the body 110, and the coupling portion 120.

The body 110 and the grip 130 have cylindrical shapes. The grip 130 has a groove 150 that is the positional and orientational reference and flats 500 are formed at predetermined positions of the outer circumference of the grip 130, at predetermined angles from the groove 150 with respect to the center axis of the fastening hole 140. The flats 500 can be considered as being formed by cutting off the outer circumference of the end portion of the grip 130. At least one flat 500 is formed and two flats 500 are shown in FIG. 13.

When the grip 130 having the groove 150 that is the positional and orientational reference is clamped and the flats 500 are also clamped in order to manufacture a tailor-made abutment, using the abutment material 100 for tailor-made according to the third exemplary embodiment of the present invention, the abutment material 100 is prevented from rotating and can be more firmly fixed.

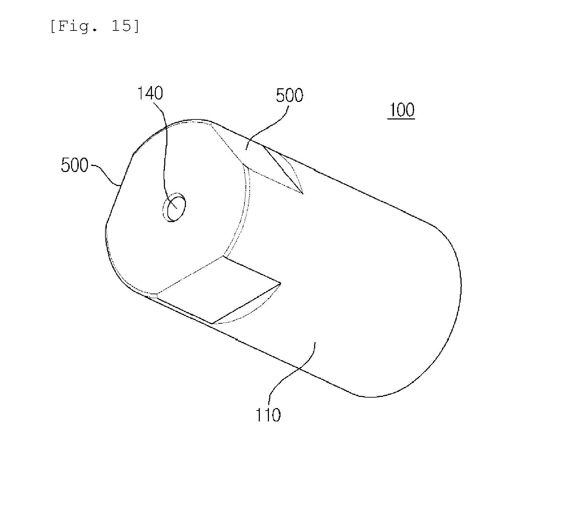

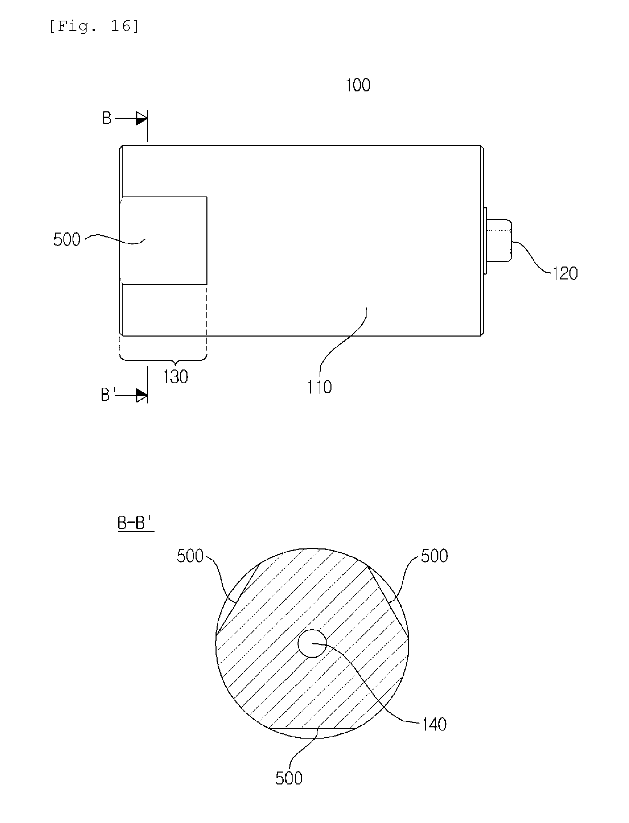

FIG. 15 is a perspective view of an abutment material for tailor-made according to a fourth exemplary embodiment of the present invention and FIG. 16 is a side view of the abutment material for tailor-made according to the fourth exemplary embodiment of the present invention.

Most components of the abutment material 100 for tailor-made according to the fourth exemplary embodiment of the present invention shown in FIG. 15 are the same as those of the abutment material 100 according to the third exemplary embodiment shown in FIG. 13. However, the abutment material 100 for tailor-made according to the fourth exemplary embodiment of the present invention is characterized by having a grip 130 with a plurality flats 500, without the groove 150.

When a plurality of flats 500 is formed and arranged at regular angles with respect to the center axis of a fastening hole 140, it is possible to clamp the abutment material at the exact position in the exact direction, even without the groove 150.

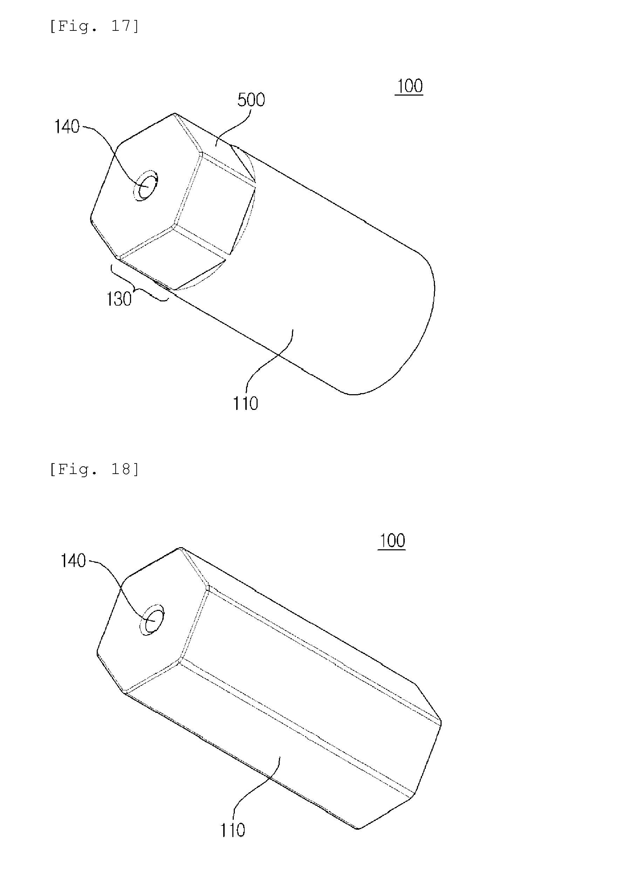

Meanwhile, FIG. 17 is a view showing when six flats are formed at a grip, in the abutment material for tailor-made according to the fourth exemplary embodiment of the present invention.

Referring to FIG. 17, when a grip 130 has six flats 500, the adjacent flats 500 are arranged at 60 degrees from each other around the center axis of a fastening hole 140.

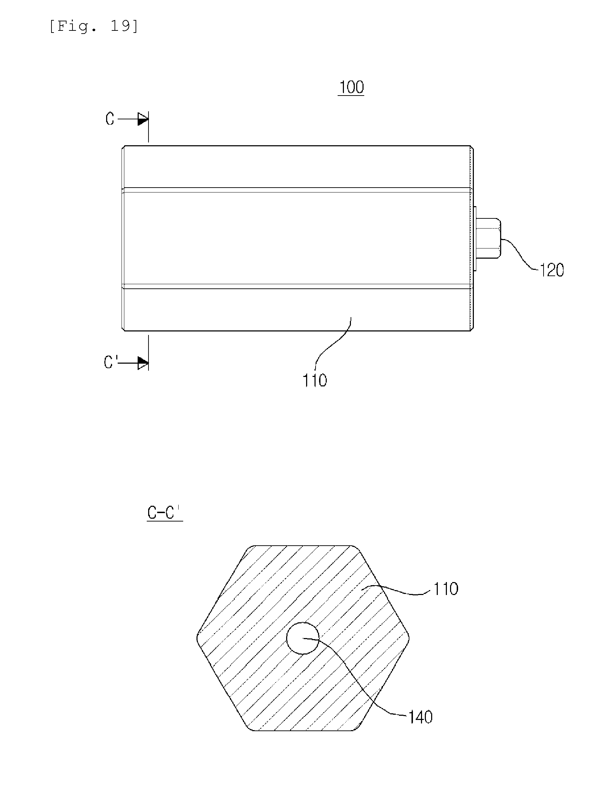

FIG. 18 is a perspective view of an abutment material for tailor-made according to a fifth exemplary embodiment of the present invention and FIG. 19 is a side view of the abutment material for tailor-made according to the fifth exemplary embodiment of the present invention.

The abutment material 100 for tailor-made according to the fifth exemplary embodiment of the present invention includes a cylindrical body 110 having a regular polygonal cross-section, a coupling portion 120 formed at one end of the body 110, and a fastening hole 140 formed through the body 110 and the coupling portion 120.

The portion opposite to the coupling portion 120 of the body 110 is clamped to manufacture a tailor-made abutment, using the abutment material 100 for tailor-made according to the fifth exemplary embodiment of the present invention. That is, a portion of the body 110 may be considered as replacing the grip. Since the cross-section of the body 110 is a regular polygon, it is possible to clamp the abutment material 100 at the exact position in the exact direction, even without the groove 150. Although the body 110 has a regular hexagonal cross-section in FIG. 19, the cross-sectional shape of the body 110 is not limited to the regular hexagon in the exemplary embodiments of the present invention and may be a regular polygon, such as an equilateral triangle, a square, and a regular pentagon.

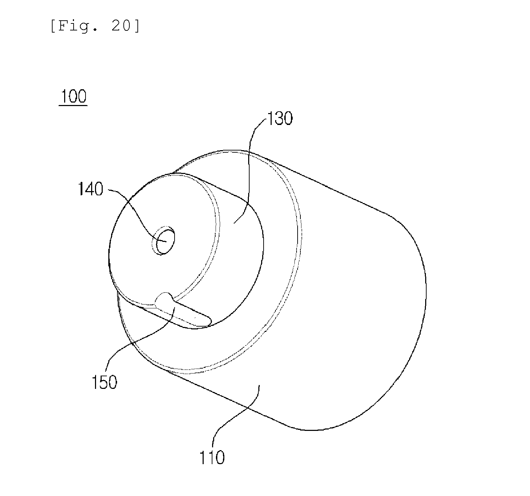

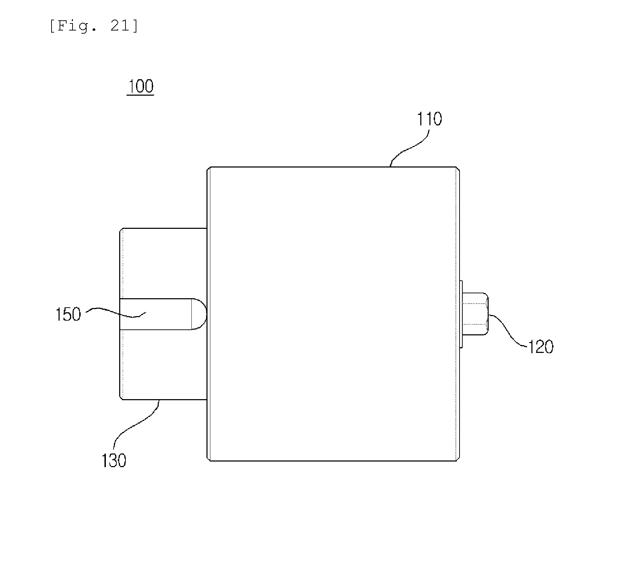

FIG. 20 is a perspective view of an abutment material for tailor-made according to a sixth exemplary embodiment of the present invention and FIG. 21 is a side view of the abutment material for tailor-made according to the sixth exemplary embodiment of the present invention.

The abutment material 100 for tailor-made according to the sixth exemplary embodiment of the present invention includes a cylindrical body 110, a cylindrical grip 130 at one end of the body 110, a coupling portion 120 formed at the other end of the body 110, and a fastening hole 140 formed through the centers of the grip 130, the body 110, and the coupling portion 120.

The body 110 has a cylindrical shape and the grip 130 also has a cylindrical shape, but the grip 130 is smaller in diameter than the body 110. A groove 150 that is the positional and orientational reference is formed on the outer circumference of the grip 130. In other words, the size of the cross-section of the grip 130 which is perpendicular to the center axis of the fastening hole 140 may be considered as being smaller than that of the cross-section of the body 110.

The grip 130 having the groove 150 that is the positional and orientational reference is clamped to manufacture a tailor-made abutment, using the abutment material 100 for tailor-made according to the sixth exemplary embodiment of the present invention.

Meanwhile, in the abutment material 100 for tailor-made according to the sixth exemplary embodiment of the present invention, although it was exemplified when the cross-sections of the body 110 and the grip 130 are circles, the cross-sectional shapes of the body 110 and the grip 130 are not limited in exemplary embodiments of the present invention. The cross-sectional shapes of the body 110 and the grip 130 may be polygons or preferably regular polygons, if needed. Further, the cross-sectional shapes of the body 110 and the grip 130 may be different. For example, the body 110 has a circular cross-section, whereas the grip 130 has a regular-hexagonal cross-section.

Although various exemplary embodiments of the present invention have been described above with reference to the drawings, It will be understood to those skilled in the art that the present invention may be implemented in various ways without changing the spirit of necessary features of the present invention.

Therefore, the exemplary embodiments described above are provided to make those skilled in the art fully understand the scope of the present invention, such that the exemplary embodiments should be construed as not limiting the present invention, but just as examples, and the present invention will be defined within claims.

## Claims

1. An implant abutment material for manufacturing an abutment connecting a fixture that is implanted in a gum with a crown forming the outer shape of an artificial tooth, the implant abutment material comprising:
a cylindrical body;
a grip integrally formed with the body to be used to clamp the body to a machine when manufacturing a tailor-made abutment by machining the body;
a coupling portion formed at the other end portion of the body and coupled with the fixture; and
a fastening hole formed through the grip, the body, and the coupling portion, to insert a fastener through the fastening hole for coupling the fixture.

2. The implant abutment material according to claim 1, further comprising a groove formed on a side of the grip, as a positional and orientational reference for clamping the abutment material to the machine.

3. The implant abutment material according to claim 2, wherein the grip additionally has a flat formed by cutting off the outer circumference of the grip.

4. The implant abutment material according to claim 1, wherein the body is tapered such that the diameter increases upward.

5. The implant abutment material according to claim 1, wherein the grip has at least two flats formed by cutting off the outer circumference of the grip.

6. The implant abutment material according to claim 5, wherein the angles between the flats that are adjacent to each other are the same.

7. The implant abutment material according to claim 1, wherein the grip extends from the body.

8. The implant abutment material according to claim 7, wherein the body and the grip have regular polygonal cross-sections.

9. The implant abutment material according to claim 1, wherein the grip is formed at a side of the body and the cross-section of the grip is smaller in size than the cross-section of the body.

10. The implant abutment material according to claim 9, wherein the cross-sectional shapes of the grip and the body are circles or regular polygons.

11. The implant abutment material according to claim 1, wherein the abutment material is any one of titanium, a titanium alloy, and a cobalt-chrome alloy.

12. A method of manufacturing a tailor-made abutment connecting a fixture that is implanted in a gum with a crown forming the outer shape of an artificial tooth, the method comprising:
(a) providing an abutment material formed to manufacture the tailor-made abutment;
(b) cutting the abutment material in a desired size;
and
(c) machining the tailor-made abutment on the basis of a designed abutment shape in consideration of the position where the tailor-made abutment is mounted and the individual characteristics of a tooth.

13. The method according to claim 12, wherein (a) the providing of an abutment material comprises:
(a-1) integrally forming a grip, which is used for clamping a cylindrical body to a machine when manufacturing a tailor-made abutment, at one end portion of the body, by machining the body;
(a-2) forming a coupling portion that is coupled with the fixture, at the other end portion of the body, using the grip; and
(a-3) forming a fastening hole through the grip, the body, and the coupling portion.

14. The method according to claim 12, further comprising: forming a groove which functions as a jig, on the side of the grip, in the manufacturing of an abutment material.

15. The method according to claim 12, further comprising: forming flats at the grip by cutting off the outer circumference of the grip, in the manufacturing of an abutment material.

16. The method according to claim 12, wherein (c) the machining of the tailor-made abutment is performed by molding or by a precision machine.
